## Europäisches Patentamt

## European Patent Office

## Office européen des brevets

(11) Veröffentlichungsnummer: **0 058 776**
**B1**

(12) **EUROPÄISCHE PATENTSCHRIFT**

(45) Veröffentlichungstag der Patentschrift:
21.08.85

(51) Int. Cl.⁴: **B 23 K 20/04**

(21) Anmeldenummer: **81110625.1**

(22) Anmeldetag: **19.12.81**

(54) Plattierverfahren.

(30) Priorität: **23.02.81 DE 3106607**

(43) Veröffentlichungstag der Anmeldung:
**01.09.82 Patentblatt 82/35**

(45) Bekanntmachung des Hinweises auf die Patenterteilung:
**21.08.85 Patentblatt 85/34**

(84) Benannte Vertragsstaaten:
**AT BE CH FR GB IT LI NL SE**

(56) Entgegenhaltungen:
**EP - A - 0 001 173**
**EP - A - 0 027 473**
**GB - A - 1 335 961**
**US - A - 4 146 164**
**US - A - 4 148 973**
**US - A - 4 160 854**
**US - A - 4 169 744**
**US - A - 4 208 222**

(73) Patentinhaber: **Fr. Kammerer GmbH, Goethestrasse 2-8,
D-7530 Pforzheim (DE)**

(72) Erfinder: **Paulus, Manfred, Dr.-Ing., Gartenweg 16,
D-7530 Pforzheim (DE)**
Erfinder: **Frömel, Norbert, Dipl.-Ing., Waldpark 5,
D-7531 Eisingen (DE)**

(74) Vertreter: **Brommer, Hans Joachim, Dr.-Ing. et al,
Patentanwälte Dipl.-Ing. R. Lemcke Dr.-Ing. H.J.
Brommer Amalienstrasse 28 Postfach 4026,
D-7500 Karlsruhe 1 (DE)**

## Beschreibung

Die Erfindung betrifft ein Plattierverfahren zur Herstellung von lokalen oder ganzflächigen Verbindungen aus konventionell nicht oder schlecht plattierbaren Werkstoffen, insbesondere durch Kaltwalzplattieren.

Die herkömmlichen Plattierverfahren wie Warmpreßschweißen oder Kaltwalzplattieren versagen bei verschiedenen Werkstoffkombinationen, da die geforderte Haftfestigkeit der Plattierpartner nicht erreicht wird. Beispiele für solche nicht oder nur schlecht plattierbare Werkstoffkombinationen sind: Fe/Ag beim Warmpreßschweißen und beim Kaltwalzplattieren, Cu/Cu beim Kaltwalzplattieren. Bei solchen Werkstoffpaarungen weist die Verbindung nur sehr geringe Festigkeit auf. Die Plattierpartner lassen sich relativ leicht durch Schälen trennen.

Zur Erhöhung der Schälfestigkeit ist es bekannt, Bleche an ihrer für die Verbindung vorgesehenen Oberfläche durch Drahtbürsten vorzubehandeln oder sie — insbesondere bei Aluminiumlegierungen — chemisch mit einer Oxidschicht zu überziehen. Hierdurch lassen sich jedoch bei zahlreichen Werkstoffkombinationen, insbesondere den vorgenannten, noch keine brauchbaren Festigkeiten erzielen.

Der vorliegenden Erfindung liegt deshalb die Aufgabe zugrunde, ein Plattierverfahren zu entwickeln, das eine technisch wenig aufwendige und kostengünstige Herstellung von Verbindungen aus konventionell nicht oder nur schlecht plattierbaren Werkstoffen erlaubt.

Diese Aufgabe wird erfindungsgemäß dadurch gelöst, daß zwischen die zu verbindenden Werkstoffe vor dem Plattieren eine Schicht aus amorphem Metall eingebracht wird.

Es hat sich überraschend ergeben, daß diese amorphe Metallschicht als außerordentlich wirksamer Haftungsvermittler fungiert und selbst bei den eingangs erwähnten, bisher kaum plattierbaren Werkstoffpaarungen zu einem nicht mehr trennbaren Metallverbund führt.

Untersuchungen der Anmelderin an einzelnen Proben haben gezeigt, daß die amorphe Metallschicht während des Preßvorganges, der zu einer Dickenreduktion von 40 bis 80% in einem Stich führt und als Kaltwalzplattierung oder Kaltpreßschweißung durchgeführt wird, in zahlreiche kurze Abschnitte zerreißt, da sie im Vergleich zu den Plattierpartnern kaum dehnfähig ist. Zwischen den amorphen Metallabschnitten verschweißen die Plattierpartner mit derart hoher Festigkeit, daß sich bei Schälversuchen der Bruch nicht in der Verbindungsfläche, sondern im einen der beiden Plattierpartner fortsetzt.

Die Erfindung bietet somit den Vorteil, daß bisher nicht oder nur schlecht plattierbare Werkstoffkombinationen durch den Einschluß amorpher Metalle als Zwischenschicht eine so hohe Haftfestigkeit erreichen, daß die Weiterverarbeitung zu Stanz- und Biegeteilen möglich ist. Dadurch werden neue Anwendungsmöglichkeiten für Materialkombinationen eröffnet, die bisher nicht plattierbar waren. Auch eignet sich das erfindungsgemäße Plattierverfahren für solche Werkstoffkombinationen, die bisher nur mit sehr aufwendigen Verfahren wie Sprengplattieren oder Schockwellenplattieren hergestellt werden konnten.

Die amorphe Zwischenschicht ist zweckmäßigerweise eine Legierung aus Eisen, Nickel und/oder Kobalt mit kristallisationsverzögernden Zusätzen. Es eignen sich jedoch auch Legierungen auf Kupfer- oder Palladium-Basis. Als kristallisationsverzögernde Zusätze kommen vor allem Bor, Silizium, Phosphor, Kohlenstoff und Aluminium in Betracht. Derartige Legierungen sind zäh-elastisch, nicht spröde und einfach in der Handhabung.

Für die Dicke der amorphen Zwischenschicht hat es sich als vorteilhaft erwiesen, sie in der Größenordnung von etwa 10 bis 50 µm zu wählen. Selbstverständlich kommen hier jedoch auch andere Abmessungen in Betracht.

Die zu verbindenden Werkstoffe mit der amorphen Zwischenschicht werden in an sich bekannter Weise einer Dickenreduktion von 40 bis 80% unterzogen. Zweckmäßigerweise erfolgt diese Dickenreduktion durch Kaltwalzplattieren. In besonderen Anwendungsfällen kommen hierfür auch Pressen in Betracht.

Im allgemeinen wird die amorphe Zwischenschicht als dünne Folie zu den bandförmigen Plattierpartnern zugeführt.

Statt dessen besteht aber auch die Möglichkeit, die amorphe Zwischenschicht in Form von einzelnen, voneinander distanzierten Streifen einzubringen. Die Plattierpartner verbinden sich dann nur im Bereich dieser Streifen, während die benachbarten Bahnen relativ schlechte Haftung aufweisen. Hierfür ergibt sich beispielsweise eine Anwendung für die Herstellung von Wärmetauschern. Im Bereich der Bahnen relativ schlechter Haftung können die Plattierpartner mechanisch leicht voneinander getrennt und aufgestaucht werden. Man erhält dadurch eine Vielzahl voneinander getrennter Strömungskanäle, die beispielsweise für den Flüssigkeitstransport benützt werden können. Es liegt jedoch ebenso im Rahmen der Erfindung, keine separate Zwischenschicht zu verwenden, sondern die amorphe Schicht auf der Oberfläche zumindest des einen der zu verbindenden Werkstoffe zu erzeugen. Nach neueren Untersuchungen läßt sich eine solche amorphe Oberflächenschicht durch Laser-Bestrahlung des Werkstoffes erzeugen. Hierfür eignen sich insbesondere Palladium-Kupfer-Silizium-Legierungen, Kupfer-Zirkon-Legierungen oder Berylliumbronzen. Dadurch kann unmittelbar auf der Oberfläche eines kristallinen Werkstoffes eine dünne amorphe Metallschicht hergestellt werden, die beim anschließenden Plattieren ebenso als Haftvermittler wirkt wie eine separate Zwischenschicht aus amorphem Metall.

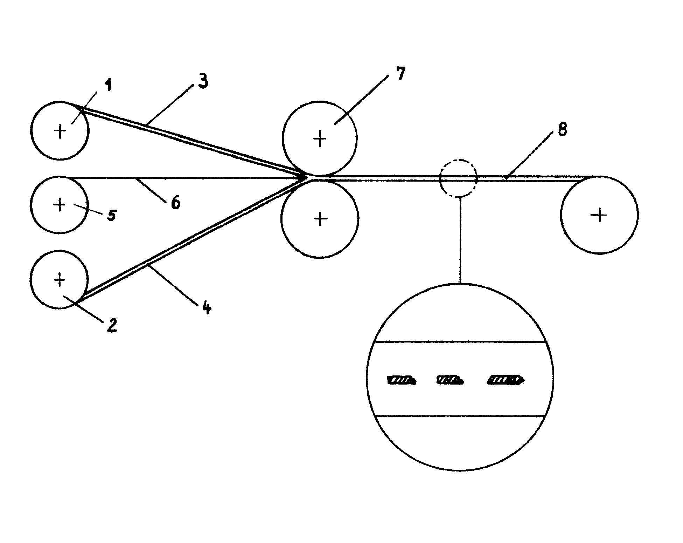

Weitere bevorzugte Merkmale und Vorteile der Erfindung ergeben sich aus der nachfolgenden Beschreibung eines Ausführungsbeispieles anhand der Zeichnung; diese zeigt das erfindungsgemäße Verfahren in schematischer Darstellung bei separater Zwischenschicht.

Von zwei Rollen 1 und 2 werden die Metallbänder 3 und 4, die miteinander verbunden werden sollen, abgewickelt. Zwischen den beiden Rollen 1 und 2 befindet sich eine Rolle 5 mit der amorphen Metallfolie 6. Sie wird als Zwischenlage mit dem darüberliegenden Metallband 3 und dem darunterliegenden Metallband 4 kontinuierlich einem Walzenpaar 7 zugeführt, indem in an sich bekannter Weise die Kaltwalzplattierung mit einer Dickenreduktion von beispielsweise 60% stattfindet.

Der Aufbau des fertigplattierten Bandes 8 ist in vergrößerter Darstellung gezeigt. Man erkennt, daß die amorphe Zwischenschicht 6 durch den Kaltwalzplattier-Prozeß in zahlreiche kurze Abschnitte zerrissen wurde, die sich räumlich getrennt voneinander in der Verbindungsebene der beiden Bänder 3 und 4 anordnen. Es entstehen also abwechselnd Bereiche, in denen Abschnitte aus amorphem Metall eingelagert sind und solche, in denen die Plattierpartner in unmittelbarem Kontakt stehen. Bevorzugt in den letztgenannten Bereichen findet die Verschweißung statt.

## Patentansprüche

1. Plattierverfahren zur Herstellung von lokalen oder ganzflächigen Verbindungen aus konventionell nicht oder schlecht plattierbaren Werkstoffen, insbesondere durch Kaltwalzplattieren, dadurch gekennzeichnet, daß zwischen die zu verbindenden Werkstoffe (3, 4) vor dem Plattieren eine Schicht (6) aus amorphem Metall eingebracht wird.

2. Plattierverfahren nach Anspruch 1, dadurch gekennzeichnet, daß die amorphe Zwischenschicht eine Legierung aus Eisen, Nickel und/oder Kobalt mit kristallisationsverzögernden Zusätzen ist.

3. Plattierverfahren nach Anspruch 2, dadurch gekennzeichnet, daß die kristallisationsverzögernden Zusätze aus Bor, Silizium, Phosphor, Kohlenstoff und/oder Aluminium bestehen.

4. Plattierverfahren nach einem der vorhergehenden Ansprüche, dadurch gekennzeichnet, daß die amorphe Zwischenschicht eine Dicke in der Größenordnung von 10 bis 50 μm aufweist.

5. Plattierverfahren nach einem der vorhergehenden Ansprüche, dadurch gekennzeichnet, daß die zu verbindenden Werkstoffe und die amorphe Zwischenschicht in bekannter Weise einer Dickenreduktion von 40 bis 80% unterzogen werden.

6. Plattierverfahren nach Anspruch 5, dadurch gekennzeichnet, daß die Dickenreduktion durch Kaltwalzplattieren erfolgt.

7. Plattierverfahren nach einem der vorhergehenden Ansprüche, dadurch gekennzeichnet, daß die amorphe Zwischenschicht als Folie oder in Form von einzelnen voneinander distanzierten Streifen eingebracht wird.

8. Plattierverfahren nach einem der Ansprüche 1 bis 6, dadurch gekennzeichnet, daß die amorphe Schicht auf der Oberfläche zumindest des einen der zu verbindenden Werkstoffe erzeugt wird.

9. Plattierverfahren nach Anspruch 8, dadurch gekennzeichnet, daß die amorphe Oberflächenschicht durch Laser-Bestrahlung des Werkstoffes erzeugt wird.

## Claims

1. A plating process for producing local or whole-surface bonding of materials, which usually cannot be plated or can be plated only unsatisfactorily, in particular by cold-rolling plating, characterized in that before, plating, a layer (6) of amorphous metal is introduced between the materials (3, 4) to be bonded.

2. A plating process according to claim 1, characterised in that the amorphous intermediate layer is an alloy of iron, nickel and/or cobalt with crystallization-retarding additives.

3. A plating process according to claim 2, characterized in that the crystallization-retarding additives comprise boron, silicon, phosphorus, carbon and/or aluminium.

4. A plating process according to any one of the preceding claims, characterized in that the amorphous intermediate layer has a thickness from 10 to 50 μm.

5. A plating process according to any one of the preceding claims, characterized in that the materials to be bonded and the amorphous intermediate layer undergo a reduction on thickness of 40 to 80% in a known manner.

6. A plating process according to claim 5, characterized in that the reduction in thickness is carried out by cold-rolling plating.

7. A plating process according to any one of the preceding claims, characterized in that the amorphous intermediate layer is introduced as a foil or in the form of strips individually spaced from one another.

8. A plating process according to any one of claims 1 to 6, characterized in that the amorphous layer is formed on the surface of at least one of the materials to be bonded.

9. A plating process according to claim 8, characterized in that the amorphous surface layer is formed by laser radiation of the material.

## Revendications

1. Procédé de placage pour réaliser des liaisons locales ou sur toute l'étendue de matériaux conventionnellement impossibles ou difficiles à plaquer, en particulier par placage par laminage à froid, caractérisé en ce que, avant le placage, on interpose une couche (6) de métal amorphe entre les matériaux à unir (3, 4).

2. Procédé de placage selon la revendication 1, caractérisé en ce que la couche intermédiaire amorphe est un alliage de fer, nickel et/ou cobalt avec des additifs retardateurs de cristallisation.

3. Procédé de placage selon la revendication 2, caractérisé en ce que les additifs retardateurs de cristallisation sont formés de bore, phosphore, carbone et/ou aluminium.

4. Procédé de placage selon une des revendications précédentes, caractérisé en ce que la couche intermédiaire amorphe possède une épaisseur de l'ordre de 10 à 50 µm.

5. Procédé de placage selon une des revendications précédentes, caractérisé en ce que l'on soumet les matériaux à unir et la couche intermédiaire amorphe de façon connue à une réduction d'épaisseur de 40 à 80%.

6. Procédé de placage selon la revendication 5, caractérisé en ce que l'on produit la réduction de l'épaisseur par laminage à froid.

7. Procédé de laminage selon une des revendications précédentes, caractérisé en ce que l'on interpose la couche intermédiaire amorphe sous forme d'une pellicule ou sous forme de rubans séparés espacés les uns des autres.

8. Procédé de placage selon une des revendications 1 à 6, caractérisé en ce que l'on produit la couche intermédiaire amorphe à la surface d'au moins un des matériaux à unir.

9. Procédé de placage selon la revendication 8, caractérisé en ce que l'on produit la couche intermédiaire amorphe par irradiation du matériau au laser.